# EUROPEAN PATENT APPLICATION

(11) **EP 4 461 578 A1**
(43) Date of publication of application: **13.11.2024**
(21) Application number: 23172017.8
(22) Date of filing: 08.05.2023
(51) Int. Cl.: B60K 37/06

(54) **ADAPTIVE VEHICLE SYSTEM**

(71) Applicant: Lotus Tech Innovation Centre GmbH, 65479 Raunheim (DE)
(72) Inventor: Weinel, Dennis, 65428 Rüsselsheim (DE); Pätzold, Anna, 55131 Mainz (DE)
(74) Representative: Fuchs Patentanwälte Partnerschaft mbB

(57) **Abstract**

A method (100; 400) of operating a vehicle system (210) comprises changing (110; 410 - 416) an operation mode of at least one functionality (230) of a vehicle system (210), receiving (120; 420) behavior data indicative of a behavior of a user (D) of the vehicle system (210), and determining (130; 430) a context of the vehicle system (210) coinciding with the behavior of the user (D). The method further comprises determining (140; 440) whether the behavior of the user (D) fulfills at least one feedback criterion with respect to the changed operation mode of the at least one functionality (230), wherein the feedback criterion is associated with at least one of one or more user reaction types, determining (150; 450), based on the determined context, whether a feedback plausibility condition is fulfilled with respect to the behavior of the user (D) and the at least one user reaction type, and, when the feedback plausibility condition is fulfilled, operating (160; 460 - 470) the vehicle system (210) with respect to the at least one functionality (230) based at least partially on the at least one user reaction type.

## Description

The present application relates to a method of operating a vehicle system. The present application further relates to a control unit for a vehicle system, a computer program product, a vehicle system and a vehicle.

### Background

Adaptive vehicle systems are known. Some adaptive vehicle systems monitor a driver's behavior, for example, by logging control input actions which the driver performs at a control interface of the vehicle system or by using additional on-board sensor devices, such as a camera or a microphone, for detecting a driver's gestures or acoustic expressions during use of the vehicle system, for example. The obtained data is utilized to determine a driver's habitual behavior, for example, the driver's preferences with respect to specific functionalities or settings of the vehicle system, regarding the driver's use of vehicle functions depending on a determined traffic situation, etc. Based on the determined habitual behavior of the driver, a vehicle system can automatically adapt functionalities of the vehicle system to better meet the driver's needs.

For example, selection menus for vehicle functions, such as functions of an on-board media system or a navigation functionality, can be automatically reorganized such that functions which the driver was found to use most frequently will be reached easily. Furthermore, identified patterns in the driver's behavior which may be deemed undesirable with respect to traffic safety are in some vehicle systems mitigated by automatically changing an operation mode of one or more functionalities of the vehicle system in such way that the driver will be induced to act in a more safety compliant manner.

However, automatically changing an operation mode of a functionality of a vehicle system may provoke negative reactions on the part of the driver, for example, irritation or stress. Moreover, an operation mode of a functionality which was changed to induce a more safety compliant behavior of the driver may turn out dysfunctional in the case of some users or may be even counter-productive regarding the intended effect.

There is a need for improved adaption of a vehicle system.

### Summary of the invention

Accordingly, there is provided a method according to claim 1, a computer program product according to claim 13, a control unit for a vehicle system according to claim 14, and a vehicle system according to claim 15.

Further, there is provided a vehicle comprising a control unit according to claim 14 and/or a vehicle system according to claim 15.

According to a first aspect, a method of operating a vehicle system is described. The method comprises changing an operation mode of at least one functionality of a vehicle system, receiving behavior data indicative of a behavior of a user of the vehicle system, and determining a context of the vehicle system coinciding with the behavior of the user. The method further comprises determining whether the behavior of the user fulfills at least one feedback criterion with respect to the changed operation mode of the at least one functionality, wherein the feedback criterion is associated with at least one of one or more user reaction types, determining, based on the determined context, whether a feedback plausibility condition is fulfilled with respect to the behavior of the user and the at least one user reaction type, and, when the feedback plausibility condition is fulfilled, operating the vehicle system with respect to the at least one functionality based at least partially on the at least one user reaction type.

Determining whether the behavior of the user, who may be a driver or a passenger of a vehicle in which the vehicle system is installed, fulfills a feedback criterion with respect to the changed operation mode of the at least one functionality enables that the user's behavior, such as a spontaneous and unintentional behavior, or a control input action by the user to the vehicle system, or a dedicated and intentional feedback by the user concerning the changed operation mode, can be identified as a reaction of the user to the changed operation mode. In this way, such reactions may be distinguished from non-indicative, unrelated behavior of the user.

By filtering out non-indicative behavior of the user, a probability that an adaption of the vehicle system is performed in an unsuited manner based on such behavior can be reduced. In addition, filtering out non-indicative behavior of the user enables reducing a processing load involved in adapting the vehicle system based on intentional and unintentional user feedback.

Furthermore, multiple feedback criteria enable that a variety of different, in particular different emotional, reactions of the user can be distinguished based on the user behavior. Thus, the method enables integrating any of different reaction types of the user to the changed operation mode, by way of distinguishable feedback from the user, into a subsequent operating of the vehicle system. Thus, the method enables that a subsequent operating of the vehicle system can be adapted to the user's needs more accurately.

Furthermore, determining a context of the vehicle system coinciding with the behavior of the user and determining, based on the determined context, whether a feedback plausibility condition is fulfilled enables improved significance of the determined user reaction type in terms of a user feedback to the changed operation mode of the functionality. In particular, taking into account a determined context enables improved plausibility or, where a user's behavior is ambiguous with respect to any of different user reaction types, disambiguation of the behavior of the user in relation to a particular user reaction type. In this way, user feedback can be distinguished from incidental or unrelated behavior of the user, and/or ambiguous user feedback can be dissolved, by considering a determined context.

Incidental, unrelated or ambiguous behavior of the user may be provoked by a context, such as a current traffic situation, a current social interaction among passengers in the vehicle, a current media output by an on-board entertainment system, a current blinding of the driver by the sun, etc., any of which may affect a user's reaction to the changed operation mode of the functionality or may provoke a behavior of the user that is similar to a possible reaction to a changed operation mode of the functionality while actually being incidental or unrelated. Therefore, by taking the context into account, the method enables that a subsequent operating of the vehicle system can be adapted to the user's needs more accurately and more reliably.

The one or more user reaction types may comprise at least one of disapproval, dislike, non-understanding, irritation, neutrality, approval, and appreciation.

The feedback criterion may comprise a non-verbal acoustic expression of an emotion of the user, a verbal acoustic expression of an emotion of the user, a facial expression of an emotion of the user, a threshold amount of glances of the user towards a part of the vehicle system affected by the changed operation mode and/or a threshold amount of erratic control input actions of the user related to the changed operation mode.

Determining the context may be performed at least partially in accordance with a daytime, a lighting condition, a traffic situation, an in-vehicle noise situation, a social situation and/or a current media output. Determining the context may comprise at least one of the following: determining a daytime by means of a clock comprised by or communicating with the vehicle system, determining a lighting condition by means of a camera and/or a light sensor comprised by or communicating with the vehicle system, determining a traffic situation by means of at least one environment sensor comprised by or communicating with the vehicle system.

The method may be performed by means of a control unit of the vehicle system. The vehicle system may be an on-board vehicle system of a vehicle, and the user of the vehicle system may be a passenger or a driver of the vehicle. As an alternative, the method may be performed at least partially at a network node which is in network communication, in particular wireless network communication, with parts of the vehicle system. Performing the method at least partially at a network node may comprise an at least partially cloud-based performing of the method. Further additionally or as an alternative, the behavior data may be received, in particular by a control unit of the vehicle system and/or by a network node in network communication with parts of the vehicle system, from at least one sensor device of the vehicle system, the sensor device configured to detect a current behavior of the user.

The at least one sensor device may comprise a control interface of the vehicle system. In this case, the behavior of the user may comprise a control input action, in particular a tactile, nontactile and/or acoustic control input action, provided by the user via the control interface. In addition or as an alternative, the at least one sensor device may comprise a gesture detection device, in particular a camera. In this case, the behavior of the user may comprise a gesture detected by means of the gesture detection device. The gesture may comprise at least one of a hand gesture, a head gesture, or an eye movement. An eye movement may be detected using one or more eye tracking techniques applied to image data acquired by means of one or more cameras. The at least one sensor device may additionally or as an alternative comprise a microphone. In this case, the behavior of the user may comprise an acoustic expression, in particular a verbal and/or a non-verbal acoustic expression, of the user detected by means of the microphone.

Changing the operation mode of the at least one functionality of the vehicle system may be initiated automatically. Changing the operation mode of the at least one functionality of the vehicle system may comprise monitoring a habitual behavior of the user, determining whether the habitual behavior of the user indicates a requirement to change the operation mode of the at least one functionality of the vehicle system, and, when the habitual behavior of the user indicates the requirement, changing the operation mode of the at least one functionality.

Operating the vehicle system with respect to the at least one functionality based at least partially on the at least one user reaction type may comprise determining whether the user reaction type is negative with respect to the changed operation mode of the at least one functionality, and when the user reaction type is not negative, setting the changed operation mode as a standard operation mode of the at least one functionality or further changing the operation mode concordantly with the previous changing, whereas, when the user reaction type is negative, determining whether changing the operation mode is categorized as safety-critical. The method may further comprise, when changing the operation mode is categorized as safety-critical, setting the changed operation mode as a standard operation mode of the at least one functionality or further changing the operation mode concordantly with the previous changing, and, when changing the operation mode is not categorized as safety-critical, further changing the operation mode non-concordantly with the previous changing.

The method may further comprise, when the detected behavior of the user does not fulfill at least one feedback criterion with respect to the modified operation mode of the at least one functionality or when the feedback plausibility condition is not fulfilled, setting the changed operation mode as a standard operation mode of the at least one functionality or further changing the operation mode concordantly with the previous changing.

Further changing the operation mode non-concordantly with the previous changing may comprise changing a system logic of the vehicle system, the system logic governing automatic changes of operation modes of functionalities of the vehicle system dependent on habitual behaviors of users of the vehicle system, and further changing the operation mode of the at least one functionality in accordance with the changed system logic. In this case, the method may further comprise determining whether a habitual behavior of the user related to the at least one functionality of the vehicle system has improved, and, when the habitual behavior of the user has improved, setting the changed system logic as a standard system logic.

The vehicle system may be a first vehicle system, and the method may further comprise transmitting data obtained based on any of the determining-operations towards a node in a communication network for enabling network-based adaptation of a generic system logic, the generic system logic governing automatic changes of operation modes of functionalities of at least one second vehicle system.

According to another aspect, a computer program product is described. The computer program product comprises portions of program code which, when executed by a processing unit of a control unit of a vehicle system, cause the control unit to perform the method according to any one of the preceding claims.

According to another aspect, a control unit for a vehicle system is described. The control unit comprises a processing unit and a data storage device communicatively coupled to the processing unit. The data storage device contains portions of program code which, when executed by the processing unit, configure the control unit to perform a method as presently described.

According to another aspect, a vehicle system is described. The vehicle system is configured for changing an operation mode of at least one functionality of the vehicle system, receiving behavior data indicative of a behavior of a user of the vehicle system, and determining a context of the vehicle system coinciding with the behavior of the user. The vehicle system is further configured for determining whether the behavior of the user fulfills at least one feedback criterion with respect to the changed operation mode of the at least one functionality, wherein the feedback criterion is associated with at least one of one or more user reaction types, determining, based on the determined context, whether a feedback plausibility condition is fulfilled with respect to the behavior of the user and the at least one user reaction type, and, when the feedback plausibility condition is fulfilled, operating the vehicle system with respect to the at least one functionality based at least partially on the at least one user reaction type.

According to another aspect, a vehicle is described. The vehicle comprises a control unit and/or a vehicle system as presently described.

### Brief Description of the Drawings

Further details, advantages and objectives of the invention become apparent from the drawings and the detailed description. There is shown in the drawings:
- Fig 1: a flow diagram of a method of operating a vehicle system according to an example;
- Fig. 2: a vehicle with a vehicle system according to an example;
- Fig. 3: a control unit for a vehicle system according to an example;
- Fig. 4: a flow diagram of a method of operating a vehicle system according to another example.

### Detailed Description

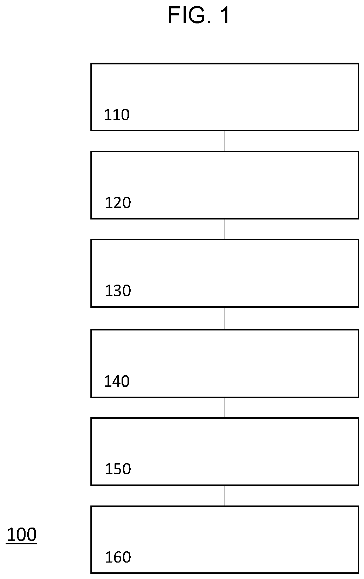

Fig. 1 shows exemplarily a flow diagram of a method 100 of operating a vehicle system. In some examples of the method 100, the method is performed by a control unit of a vehicle system which resides in a vehicle. In other examples, the method 100 is performed by one or more servers in a communication network, where such one or more servers are in communication, for example in wireless communication, with a vehicle system in a vehicle.

The method 100 comprises changing an operation mode of at least one functionality of the vehicle system, step 110. The functionality can generally pertain to any controllable function of the vehicle. However, in most examples, the functionality pertains to a controllable function which serves a driver's comfort, such as an adjustable seat or an on-board entertainment system, or a controllable driver information system, such as a navigation functionality, information presented on a screen, a configurable selection menu or configurable control buttons provided on a touch sensitive screen, etc. Furthermore, an operation mode of such a functionality pertains, for example, to any particular configuration of a thus configurable function, any particular arrangement of controls for controlling the function, any particular setting which a user may choose, for example, according to his or her preferences, body height, etc. in connection with adjustable settings, any adjustable sensitivity of automatically controlled functions, for example, depending on the strength of a sensor signal or intensity of a user input, etc.

Changing the operation mode is performed in some examples automatically, for example, after expiry of a predetermined interval, upon detection of a pattern in the user's behavior which indicates, for example, specific preferences of the user or undesirable behavior of the user in certain traffic situations, etc. In other examples, changing the operation mode is initiated by the user, for example, by providing corresponding control input to the vehicle system which indicates that the driver desires adjustment regarding a vehicle function, for example, without explicitly specifying the functionality or in which way the user wishes that an operation mode of the functionality is changed.

The method 100 further comprises receiving behavior data indicative of a behavior of the user of the vehicle system, step 120. In an example, the behavior data comprises sensor data generated and transmitted by a sensor in the vehicle, wherein the sensor detects a behavior of the user. For example, the behavior of the user comprises a behavior of the user after the operation mode of the functionality has been changed, wherein the user's behavior can be indicative of an effect which the changed operation mode of the functionality has had on the user, for example, in the form of a spontaneous emotional reaction, a different control behavior when providing control inputs to the vehicle system, a dedicated feedback from the user regarding the changed operation mode by which the user approves or disapproves the changed operation mode, etc.

The method 100 further comprises determining a context of the vehicle system coinciding with the behavior of the user, step 130. The context of the vehicle system comprises in some examples a social situation, such as a dialogue, which is taking place between passengers of the vehicle. Moreover, the context of the vehicle system comprises, for example, a current traffic situation in an environment of the vehicle, a daytime, a lighting condition, media content which is output by means of an on-board entertainment system of the vehicle, etc. In general, any context of the vehicle system can be considered which is detectable by technical means and which potentially influences the user's behavior as indicated by the behavior data received in step 120. Furthermore, coincidence of the context is to be understood in a broad sense, i.e., comprising any temporal, physical and/or psychological relation or any other relation between the context and the user's behavior by which an influence of the context on the user's behavior is likely.

The method 100 further comprises determining whether the behavior of the user fulfils at least one feedback criterion with respect to the changed operation mode of the at least one functionality, step 140. The feedback criterion is associated with at least one of one or more user reaction types. For example, any one of the one or more user reaction types specifies a potential reaction of the driver to the changed operation mode of the functionality regarding one of various relevant categories of reacting to the changed operation mode in the context of adapting the vehicle system. In some examples, the user reaction types comprise any one of disapproval, dislike, non-understanding, irritation, neutrality, approval and appreciation. Accordingly, in some examples, the behavior of the user as indicated in the received behavior data is analysed to determine whether the indicated behavior of the user can be regarded as a reaction to the changed operation mode of the at least one functionality in accordance with any one of the aforesaid reaction types. Otherwise, i.e., when the user's behavior cannot be categorised according to a user reaction type, no corresponding attribution to a user reaction type is performed, for example.

In some examples, feedback criteria comprise a non-verbal acoustic expression of an emotion of the user, a verbal acoustic expression of an emotion of the user, a facial expression of an emotion of the user, a threshold amount of glances of the user towards the part of the vehicle system affected by the changed operation mode and/or threshold amount of erratic control input actions of the user related to the changed operation mode.

The method 100 further comprises determining, based on the determined context, whether a feedback plausibility condition is fulfilled with respect to the behavior of the user and the at least one user reaction type, step 150. For example, by relating the user reaction type to the behavior of the user as indicated in the received behavior data and the determined context, a plausibility can be determined as to whether the indicated behavior of the user has been provoked by the changed operation mode of the functionality at least to a significant extent, or whether the user's behavior has been essentially provoked by the context of the vehicle system, for example, by a current media output or an incidental traffic situation, or similar. Depending on the determined plausibility that the user's behavior constitutes a suitable feedback regarding the changed operation mode, the feedback plausibility condition is regarded as fulfilled.

The method 100 further comprises, when the feedback plausibility condition is fulfilled, operating the vehicle system with respect to the at least one functionality based at least partially on the at least one user reaction type. For example, when the user reaction type indicates a negative reaction on the part of user, such as disapproval, dislike, non-understanding or irritation, operating the vehicle system with respect to the at least one functionality can involve an additional change of the operation mode such that the user's reaction is mitigated. Alternatively, when the user reaction type indicates a non-negative reaction, such as neutrality, approval or appreciation, operating the vehicle system with respect to the at least one functionality is performed in accordance with the changed operation mode, for example.

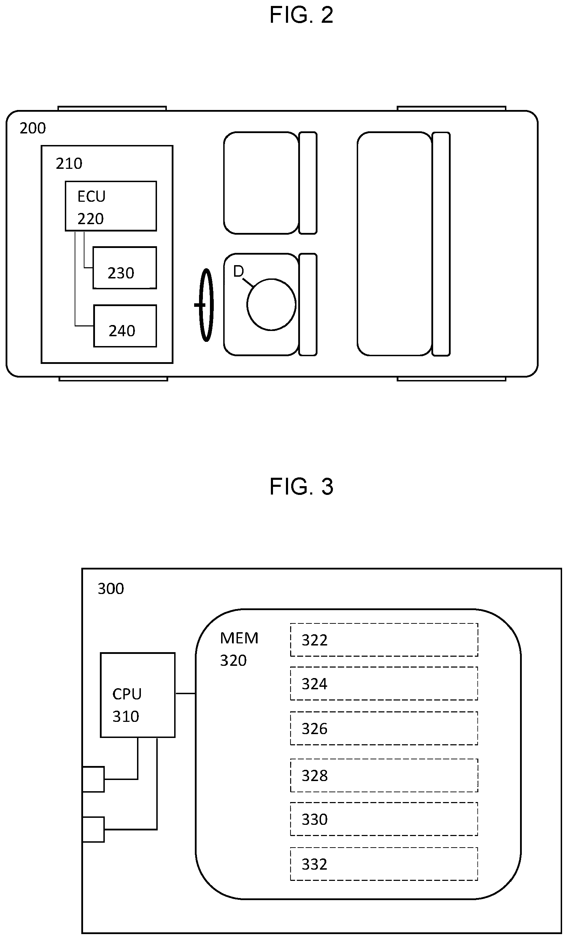

Fig. 2 shows schematically and exemplarily a vehicle 200. The vehicle 200 comprises a vehicle system 210. The vehicle system 210 comprises a control unit 220, at least one controllable functionality 230 of the vehicle system 210, and at least one sensor device 240. In the example shown in Fig. 2, a user D is seated in the driver's seat of the vehicle 200, whereas additional passenger seats of the vehicle 200 are unoccupied. The vehicle system 210 is configured for performing the method 100 as described in connection with Fig. 1.

In an example, the control unit 220 automatically initiates a change of an operation mode of the functionality 230. In the example, the functionality 230 relates to an arrangement of selectable controls in a selection menu which is output to the driver D via a touch sensitive screen of the vehicle system 210. Moreover, in the example, the change of the operation mode has been initiated after the control unit 220 has determined a frequent use of a particular control in the selection menu by the driver D, whereas accessing the control requires a relatively large amount of user input actions and/or the control unit 220 has detected repeated false control inputs when the driver D tries to access the respective control. For determining a frequent use of any particular control and/or repeated false control inputs by the driver D, the vehicle system is in some examples adapted to record the driver's control input actions. Changing the operation mode has been performed in this example in such way that an arrangement of the controls of the selection menu is changed to provide the driver D with an easier access to the frequently used control.

The control unit 220 further receives behavior data indicating a behavior of the driver D. The behavior data may be received from the touch sensitive screen via which the functionality 230 is provided to the driver D, for example, by way of user input actions. In addition or as an alternative, the behavior data is received by the control unit 220 from the sensor device 240. To this end, the sensor device 240 is configured to detect a user behavior. In the example, the sensor device 240 comprises a camera that detects a visual image of the driver D and transmits corresponding image information to the control unit 220.

The control unit 220 is further configured to determine a context of the vehicle system 210, the context coinciding with the behavior of the user D. The context is determined, for example, based on a digital clock of the control unit 220, wherein the digital clock indicates a daytime. The control unit 220 further analyses sensor information as retrieved from the sensor device 240 with respect to the context, such as a lighting condition to which the driver D is exposed. Other sensor information is available to the control unit 220, for example, via the user interface of the functionality 230 or from additional sensor devices, such as microphones, environment sensors of the vehicle 200, or any other type of sensors and/or data that may be comprised by or accessible to the control unit 220, for example, over a network by means of a transceiver unit of the vehicle system 210.

By performing the method 100 as described in connection with Fig. 1, the control unit 220 determines whether the behavior of the user fulfils at least one feedback criterion with respect to the changed operation mode of the functionality 230. The control unit 220 further determines based on the context whether a feedback plausibility condition is fulfilled with respect to the behavior of the driver D and at least one user reaction type associated with the feedback criterion. The control unit 220 subsequently operates the vehicle system 210 with respect to the functionality 230 based at least partially on the at least one user reaction type, when the feedback plausibility condition has been fulfilled.

Referring to the example, operating the functionality 230 in accordance with the changed operation mode is chosen, for example, when the user's behavior has been determined as fulfilling a feedback criterion associated with a non-negative reaction and the determined context does not indicate that the users behavior may have been caused by circumstances that are unrelated to the functionality 230, such as an external influence caused by a current traffic situation or interaction among passengers of the vehicle 200.

Fig. 3 shows schematically and exemplarily a control unit 300 for a vehicle system. The control unit 300 comprises a processing unit 310 which is operatively connected to a memory device 320. Furthermore, the control unit 300 is configured to receive and/or output data via one or more interfaces, as schematically indicated in the drawing.

The memory device 320 stores program code which is executable by means of the processing unit 310. The control unit 300 is implementable by way of an on-board control unit, such as the control unit 220 of the vehicle system 210 in Fig. 2. In other examples, the control unit 300 is implemented at a network node which is in network communication with an on-board vehicle system to receive data from the vehicle system and or output and transmit generated data towards the vehicle system via a communication network.

The memory device 320 stores program code which, when executed by means of the processing unit 310, configure the control unit 300 to perform a method as previously described. In particular, the memory device 320 stores program code which in combination with the processing unit 310 constitute an operation mode changing module 322 for changing an operation mode of at least one functionality of the vehicle system. The memory device 320 further stores program code corresponding to a behavior data receiving module 324 for receiving behavior data indicative of the behavior of a user of the vehicle system, a context determining module 326 for determining the context of the vehicle system coinciding with the behavior of the user, a feedback determining module 328 for determining whether the behavior of the user fulfils at least one feedback criterion with respect to the changed operation mode of the at least one functionality, wherein the feedback criterion is associated with at least one of one or more user reaction types. The memory device 320 further stores program code corresponding to a feedback plausibility determining module 334 determining, based on the determined context, whether a feedback plausibility condition is fulfilled with respect to the behavior of the user and the at least one user reaction type, and a vehicle system operating module 332 for operating, when the feedback plausibility condition is fulfilled, the vehicle system with respect to the at least one functionality based at least partially on the at least one user reaction type.

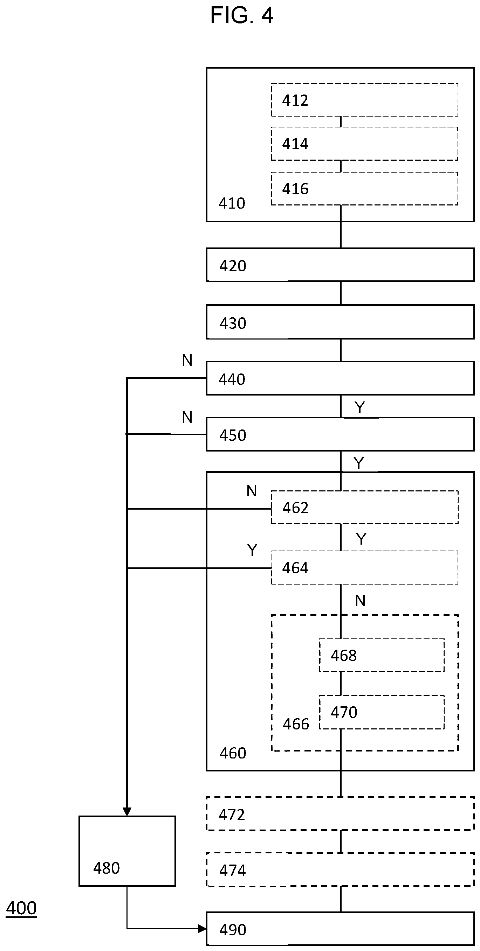

Fig. 4 shows a flow diagram of another example of a method 400 of operating a vehicle system. The steps 410, 420, 430, 440, 450 and 460 of the method 400 correspond essentially to the respective steps 110, 120, 130, 140, 150 and 160 of the method 100 shown in Fig. 1, unless otherwise clear from the drawings and the following description.

The method 400 comprises changing an operation mode of at least one functionality of vehicle system, steps 410 to 416. In the example, changing the operation mode of the at least one functionality, step 410, comprises monitoring a habitual behavior of the user, step 412. In some examples, monitoring is performed by logging control input actions of the user, by logging sensor data indicative of the user's behavior, by logging vehicle state information, by logging navigational information and/or by logging any other sort of data indicative of a user's behavior and analysing such data with respect to the user's habitual behavior. The method 400 further comprises determining whether the habitual behavior of the user indicates a requirement to change the operation mode of the at least one functionality of the vehicle system, step 414. When the habitual behavior of the user indicates the requirement, the operation mode of the at least one functionality is automatically changed, step 416.

The method 400 further comprises receiving behavior data indicative of the behavior of the user, step 420, and determining a context of the vehicle system coinciding with the behavior of the user, step 430. Regarding steps 420 and 430, corresponding details as in the case of steps 120 and 130 apply.

At step 440, it is determined whether the behavior of the user fulfils at least one feedback criterion with respect to the changed operation mode of the at least one functionality, wherein the feedback criterion is associated with at least one of one or more user reaction types, similar to step 140 of the method 100. In the case of step 440, if the determining yields that the behavior of the user does not fulfil at least one feedback criterion with respect to the changed operation mode of the functionality, N-branch, the changed operation mode is set as a standard operation mode of the at least one functionality or the operation mode is changed further concordantly with the previous changing, step 480. Changing the operation mode further concordantly with the previous changing comprises, for example, that an additional change is applied to the changed operation mode wherein the additional change increases an affect that was brought about by the previous changing in step 416.

When the behavior of the user fulfils the at least one feedback criterion, Y-branch, it is determined at step 450 based on the determined context whether a feedback plausibility condition is fulfilled with respect to the behavior of the user. When the determining yields that the feedback plausibility condition is not fulfilled, N-branch, the method continues with step 480, i.e., the changed operation mode is set as a standard operation mode of the at least one functionality or the operation mode is changed further concordantly with the previous changing.

When the plausibility condition is fulfilled, Y-branch, the vehicle system is operated with respect to the at least one functionality based at least partially on the at least one user reaction type, steps 462 470, as will be described next.

Operating the vehicle system based at least partially on the at least one user reaction type comprises determining whether the user reaction type is negative with respect to the changed operation mode of the at least one functionality, step 462. When it is determined that the user reaction type is non-negative, N-branch, the method continues with step 480, i.e., the changed operation mode is set as a standard operation mode of the at least one functionality or the operation mode is changed further concordantly with the previous changing. When it is determined that the user reaction type is negative with respect to the changed operation mode, Y-branch, the method continues with step 464.

At step 464, it is determined whether changing the operation mode, as previously performed at step 416, is categorised as safety critical. When it is determined that the previous changing of the operation mode is a safety critical measure, Y-branch, the method continues with step 480. That is, the changed operation mode is set as a standard operation mode of the at least one functionality or the operation mode is changed further concordantly with the previous changing although the user's reaction is negative. In such way, a safety critical change in an operation mode of vehicle function is given priority over the users preferences. Otherwise, when it is determined that the changing of the operation mode is not safety critical, N-branch, the method proceeds to steps 466 to 470, i.e., the operation mode is changed further in a manner that is non-concordant with the previous changing. Non-concordantly changing the operation mode further comprises in some examples that an additional change is applied to the changed operation mode in such way that an effect of the previous changing is reduced and/or substantially altered by the further changing.

Changing the operation mode further non-concordantly with the previous changing, step 466, comprises in the shown example changing a system logic of the vehicle system, wherein the system logic governs automatic changes of operation modes of functionalities of the vehicle system dependent on habitual behaviors of users of the vehicle system, step 468, and further changing the operation mode of the at least one functionality in accordance with the changed system logic, step 470.

The method 400 further comprises determining whether a habitual behavior of the user related to the at least one functionality of the vehicle system has improved, step 472. When the habitual behavior of the user has improved, the changed system logic is set as a standard system logic, step 474.

The method 400 further comprises transmitting any of the data which has been obtained based on any of the determining operations in steps 430 to 450 towards a node in a communication network for enabling network-based adaptation of a generic system logic. The generic system logic governs automatic changes of operation modes of functionalities of at least one second vehicle system, for example, of any extant vehicle systems of the same type as the vehicle system to which the previous steps of the method 400 have been applied.

## Claims

1. Method (100; 400) of operating a vehicle system (210), comprising:
changing (110; 410 - 416) an operation mode of at least one functionality (230) of a vehicle system (210);
receiving (120; 420) behavior data indicative of a behavior of a user (D) of the vehicle system (210);
determining (130; 430) a context of the vehicle system (210) coinciding with the behavior of the user (D);
determining (140; 440) whether the behavior of the user (D) fulfills at least one feedback criterion with respect to the changed operation mode of the at least one functionality (230), wherein the feedback criterion is associated with at least one of one or more user reaction types;
determining (150; 450), based on the determined context, whether a feedback plausibility condition is fulfilled with respect to the behavior of the user (D) and the at least one user reaction type, and
when the feedback plausibility condition is fulfilled, operating (160; 460 - 470) the vehicle system (210) with respect to the at least one functionality (230) based at least partially on the at least one user reaction type.

2. Method according to claim 1, wherein the one or more user reaction types comprise at least one of disapproval, dislike, non-understanding, irritation, neutrality, approval, and appreciation.

3. Method according to claim 1 or claim 2, wherein the feedback criterion comprises a non-verbal acoustic expression of an emotion of the user (D), a verbal acoustic expression of an emotion of the user (D), a facial expression of an emotion of the user (D), a threshold amount of glances of the user (D) towards a part of the vehicle system (210) affected by the changed operation mode and/or a threshold amount of erratic control input actions of the user (D) related to the changed operation mode.

4. Method according to any one of the preceding claims, wherein determining (130; 430) the context is performed at least partially in accordance with a daytime, a lighting condition, a traffic situation, an in-vehicle noise situation, a social situation and/or a current media output.

5. Method according to any one of the preceding claims, wherein:
the method is performed by means of a control unit (220; 300) of the vehicle system (210);
the vehicle system (210) is an on-board vehicle system of a vehicle (200), and the user (D) of the vehicle system (210) is a passenger or a driver of the vehicle (200), and/or
the behavior data is received from at least one sensor device (240) of the vehicle system (210), the sensor device (240) configured to detect a current behavior of the user (D).

6. Method according to claim 5, wherein:
the at least one sensor device (240) comprises a gesture detection device, and the behavior of the user (D) comprises a gesture detected by means of the gesture detection device;
the at least one sensor device (240) comprises a microphone, and the behavior of the user (D) comprises an acoustic expression of the user (D) detected by means of the microphone, and/or
the at least one sensor device (240) comprises a control interface, and the behavior of the user (D) comprises a control input action of the user (D) received via the control interface.

7. Method according to any one of the preceding claims, wherein changing (110; 410-416) the operation mode of the at least one functionality (230) of the vehicle system (210) is initiated automatically and/or comprises .

8. Method according to any one of the preceding claims, wherein changing (410 - 416) the operation mode of the at least one functionality (230) of the vehicle system (210) comprises:
monitoring (412) a habitual behavior of the user (D);
determining (414) whether the habitual behavior of the user indicates a requirement to change the operation mode of the at least one functionality (230) of the vehicle system (210), and
when the habitual behavior of the user indicates the requirement, changing (416) the operation mode of the at least one functionality (230).

9. Method according to claim 8, wherein operating (460 - 470) the vehicle system (210) with respect to the at least one functionality (230) based at least partially on the at least one user reaction type comprises:
determining (462) whether the user reaction type is negative with respect to the changed operation mode of the at least one functionality (230), and
when (N) the user reaction type is not negative, setting (480) the changed operation mode as a standard operation mode of the at least one functionality (230) or further changing the operation mode concordantly with the previous changing (410 - 416), and
when the user reaction type is negative, determining (464) whether changing (410 - 416) the operation mode is categorized as safety-critical, and:
when changing (410 - 416) the operation mode is categorized as safety-critical, setting (480) the changed operation mode as a standard operation mode of the at least one functionality (230) or further changing the operation mode concordantly with the previous changing (410 - 416), and,
when changing (410 - 416) the operation mode is not categorized as safety-critical, further changing (466) the operation mode non-concordantly with the previous changing (410 -416).

10. Method according to claim 9, further comprising:
when (N) the detected behavior of the user (D) does not fulfill at least one feedback criterion with respect to the modified operation mode of the at least one functionality or when (N) the feedback plausibility condition is not fulfilled, setting (480) the changed operation mode as a standard operation mode of the at least one functionality (230) or further changing the operation mode concordantly with the previous changing (410 - 416).

11. Method according to claim 9 or claim 10, wherein further changing (466) the operation mode non-concordantly with the previous changing (410 - 416) comprises:
changing (468) a system logic of the vehicle system (210), the system logic governing automatic changes of operation modes of functionalities (230) of the vehicle system (210) dependent on habitual behaviors of users (D) of the vehicle system (210), and
further changing (470) the operation mode of the at least one functionality (230) in accordance with the changed system logic, and wherein the method further comprises: determining (472) whether a habitual behavior of the user (D) related to the at least one functionality (230) of the vehicle system (210) has improved, and
when the habitual behavior of the user (D) has improved, setting (474) the changed system logic as a standard system logic.

12. Method according to any one of the preceding claims, wherein the vehicle system (210) is a first vehicle system and the method further comprises:
transmitting (490) data obtained based on any of the determining-operations (130 - 150; 430 - 450) towards a node in a communication network for enabling network-based adaptation of a generic system logic, the generic system logic governing automatic changes of operation modes of functionalities of at least one second vehicle system.

13. Computer program product comprising portions of program code which, when executed by a processing unit of a control unit (220; 300) for a vehicle system (210) and/or by a network node in communication with the vehicle system (210), cause the control unit (220; 300) and/or the network node to perform the method according to any one of the preceding claims.

14. Control unit (220; 300) for a vehicle system (210), the control unit (220; 300) comprising a processing unit (310) and a data storage device (320) communicatively coupled to the processing unit (310), wherein the data storage device (320) contains portions of program code which, when executed by the processing unit (310), configure the control unit (220; 300) to perform the method according to any one of claims 1 to 12.

15. Vehicle system (210) configured for:
changing (110; 410 - 416) an operation mode of at least one functionality (230) of the vehicle system (210);
receiving (120; 420) behavior data indicative of a behavior of a user (D) of the vehicle system (210);
determining (130; 430) a context of the vehicle system (210) coinciding with the behavior of the user (D);
determining (140; 440) whether the behavior of the user (D) fulfills at least one feedback criterion with respect to the changed operation mode of the at least one functionality (230), wherein the feedback criterion is associated with at least one of one or more user reaction types;
determining (150; 450), based on the determined context, whether a feedback plausibility condition is fulfilled with respect to the behavior of the user (D) and the at least one user reaction type, and
when the feedback plausibility condition is fulfilled, operating (160; 460 - 470) the vehicle system (210) with respect to the at least one functionality (230) based at least partially on the at least one user reaction type.
